(19) Europäisches Patentamt

European Patent Office

Office européen des brevets

(11) **EP 1 164 361 A1**

(12) **EUROPÄISCHE PATENTANMELDUNG**

(43) Veröffentlichungstag:
**19.12.2001  Patentblatt 2001/51**

(51) Int Cl.⁷: **G01F 1/74**, G01F 25/00,
G01F 15/04

(21) Anmeldenummer: **00810511.6**

(22) Anmeldetag: **14.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder:
• **Matter, Daniel**
**5200 Brugg (CH)**

• **Prêtre, Philippe**
**5405 Baden-Dättwil (CH)**
• **Kleiner, Thomas**
**5415 Rieden (CH)**
• **Wenk, Alexander**
**5079 Zeihen (CH)**

(74) Vertreter: **ABB Patent Attorneys**
**c/o ABB Business Services Ltd, Intellectual Property (SLE-I), Haselstrasse 16/699**
**5401 Baden (CH)**

(54) **Gaszähler**

(57)  Es wird ein Gaszähler zur Bestimmung eines Gasgemisch-Verbrauchs offenbart, welcher zu einer Durchflussrate proportionale Sensorsignalwerte bestimmt, wobei dieser Gaszähler als Energiemessgerät geeicht ist. Die Eichung basiert auf einem Basis-Gasgemisch. Bei der Messung des Gasverbrauchs wird ein gemessener Energieverbrauchswert mit einem Korrekturfaktor multipliziert, welcher mindestens annähernd den Heizwert eines bezogenen Gasgemisches berücksichtigt, wobei dieser Heizwert von einer externen Einheit bestimmt wird. Dadurch wird es möglich, mit einem einfachen und kostengünstigen Gaszähler für einen Gasverbrauch den effektiven Energiebezug festzustellen und eine Abrechnung entsprechend diesem Bezug zu erstellen.

Fig. 2

EP 1 164 361 A1

**Beschreibung**

**Technisches Gebiet**

Die Erfindung bezieht sich auf ein Verfahren zur Bestimmung eines Gasgemisch-Verbrauchs und einen Gaszähler gemäss Oberbegriff des Patentanspruches 1 beziehungsweise 10. Das Verfahren und der Gaszähler sind insbesondere für den Gebrauch im Haushalt- und Gewerbebereich und insbesondere zur Bestimmung des Bezugs von Erdgas geeignet.

**Stand der Technik**

Heute basieren Gasrechnungen, insbesondere im Haushalt- und Gewerbebereich, ausschliesslich auf dem bezogenen Gasvolumen. Es werden deshalb vor allem Gaszähler eingesetzt, welche direkt auf einer Volumenmessung des durchflossenen Gases basieren, wobei sie teilweise Messfehler, welche durch Temperaturänderungen entstehen, kompensieren.

Der wohl am häufigsten eingesetzte Gaszähler ist der sogenannte Balgengaszähler, wie er in U. Wernekinck, Gasmessung und Gasabrechnung, Vulkan-Verl. 1996, 20-31, beschrieben ist. Der Balgengaszähler verfügt über zwei Messkammern, welche der Reihe nach wechselseitig durch das durchströmende Gas gefüllt und wieder entleert werden. Während eine Kammer sich füllt, verdrängt sie in der anderen das Gas. Die Füllungen beziehungsweise Leerungen werden gezählt und ergeben multipliziert mit dem Messkammervolumen das Gesamtvolumen des durchgeströmten Gases. Da das Volumen des Gases jedoch mit der Änderung von Umgebungstemperatur und Druck variiert, unterliegen diese Messungen Fehlern. Im Sommer, wenn das Gas warm ist und ein grösseres Volumen einnimmt, würde der Konsument mehr für denselben kalorimetrischen Wert des Gases zahlen als im Winter. Die heutigen Balgengaszähler werden deshalb mit einfachen mechanischen oder elektrischen Vorrichtungen zur Temperaturkompensation versehen. Druckschwankungen werden jedoch nicht berücksichtigt.

Aus WO 99/06800 ist ein Gaszähler bekannt, welcher eine Volumendurchflussrate bestimmt. Hierfür wird in einer Gasröhre mittels eines ersten Thermistors das Abkühlverhalten und mittels eines zweiten Thermistors die aktuelle Temperatur des Gases detektiert und daraus eine Durchflussrate der Gasmoleküle bestimmt. In der Röhre ist ferner eine Zelle angeordnet, in welcher das Abkühlverhalten von ruhendem Gas detektiert wird. Dadurch lässt sich während des Betriebs der Gasleitung zu jedem beliebigen Zeitpunkt ein Kalibrierwert erhalten. Mittels dieses Kalibrierwertes lässt sich nun aus der Durchflussrate der Gasmoleküle wiederum die Volumendurchflussrate bestimmen.

Trotz all dieser Kompensationen sind Gaszähler, welche auf volumetrische Messungen beruhen, stets fehlerbehaftet und führen zu einer inkorrekten Gasrechnung. Zudem ist ein Abrechnungsprinzip, welches auf einem Volumenverbrauch basiert, gegenüber dem Verbraucher unfair. Sein Gasverbrauch bestimmt sich nämlich nicht nach dem Volumen, sondern nach der Gasmenge, das heisst der verbrauchten Masse des Gases, sowie nach der Qualität des Gases, das heisst, seinem Heizwert. Je dichter und je qualitativ hochstehender das Gas ist, umso weniger Volumen wird zur Erzielung desselben Wirkungsgrades benötigt, sei dies in einer Heizung, einer Warmwasseraufbereitung oder einer Kochstelle.

In der noch unveröffentlichten Deutschen Patentanmeldung Nr. 199 08 664.8 wird deshalb ein Gaszähler beschrieben, welcher die Gasmassen-Durchflussrate bestimmt und somit die Dichte des Gases berücksichtigt. Hierfür wird vorzugsweise ein Anemometer eingesetzt, wie es aus F. Mayer et al., Single-Chip CMOS Anemometer, Proc. IEEE, International Electron Devices Meeting (IEDM, 1997), 895-898 bekannt ist. Die Offenbarung dieser zwei Dokumente ist Bestandteil der nachfolgenden Beschreibung.

In den oben beschriebenen Gaszählern werden jedoch Schwankungen in der Qualität des Gases nicht berücksichtigt. Diese Schwankungen sind vorallem bei Erdgas beträchtlich und entstehen hauptsächlich dadurch, dass das Erdgas je nach Quelle eine andere Zusammensetzung aufweist. In der Gaszuleitung werden jedoch Gase von verschiedenen Quellen gemischt angeboten, wobei das Mischungsverhältnis je nach Angebot stark variieren kann.

Aus dem Stand der Technik sind zwar Geräte bekannt, welche den Heizwert eines Gases berücksichtigen und einen Energieverbrauch bestimmen. So offenbart WO 00/11465 ein Energiemessgerät, welches einerseits einen Balgengaszähler zur Messung des Volumens und andererseits eine Vorrichtung zur Bestimmung des kalorimetrischen Wertes eines Gases aufweist, wobei diese kalorimetrische Messvorrichtung auf einem akustischen Messprinzip basiert. Auch US-A-6'047'589 offenbart ein Energiemessgerät, welches Durchflussvolumen und kalorimetrischen Wert eines Gases bestimmt, wobei hier beide Messungen auf dem akustischen Effekt basieren. Beide Energiemessgeräte sind somit zur Volumenmessung geeicht, wobei sie jeweils den aktuell vor Ort gemessenen Heizwert mit dem Volumenmesswert verrechnen, um so den gewünschten Energiewert zu erhalten.

Diese Energiemessgeräte sind somit relativ kompliziert aufgebaut, müssen sie doch sowohl eine Volumenmessung, eine Heizwertbestimmung und zudem eine Verknüpfung der zwei erhaltenen Messwerte durchführen können. Derartige Geräte sind deshalb für den Einsatz als normaler Gaszähler im Haushalt- und Gewerbebereich zu teuer.

## Darstellung der Erfindung

Es ist deshalb Aufgabe der Erfindung, ein Verfahren zur Bestimmung eines Gasgemisch-Verbrauchs und einen Gaszähler der eingangs genannten Art zu schaffen, welche auf einfache Art und Weise die Messung eines heizwertabhängigen Gasbezuges ermöglichen und somit für den Einsatz im Haushalt- und Gewerbebereich geeignet sind.

Diese Aufgabe löst ein Verfahren und ein Gaszähler mit den Merkmalen des Patentanspruches 1 beziehungsweise 10.

Das erfindungsgemässe Verfahren geht von der Erkenntnis aus, dass sich ein Messwert bei Messung einer Durchflussrate, insbesondere einer Massen-Durchflussrate, in Abhängigkeit des kalorimetrischen Wertes oder Heizwertes des Gases ändert. Dabei weist diese Abhängigkeit eine feste Relation auf, welche in einer ersten Ordnung ein proportionales Verhältnis ist. Dadurch ist es möglich, den erfindungsgemässen Gaszähler direkt als Energiemessgerät zu eichen und Korrekturen, welche durch Schwankungen in der Zusammensetzung des Gasgemisches hervorgerufen werden, unabhängig von der Messung des Gaszählers durchzuführen. Somit erübrigt sich eine Bestimmung des Heizwertes mittels des Gaszählers. Der Heizwert eines bezogenen Gasgemisches lässt sich von einer externen und örtlich vom Gaszähler getrennten Einheit durchführen.

Vorteilhaft ist, dass somit nicht jeder Gaszähler mit einer Einheit zur Bestimmung des Heizwertes ausgestattet sein muss. Eine einzige externe Einheit genügt, um mehrere Verbraucher und somit Gaszähler, welche an dasselbe Gasnetz angeschlossen sind, mit benötigten Angaben über den Heizwert des bezogenen Gasgemisches zu versorgen.

In einer bevorzugten Variante des erfindungsgemässen Verfahrens übermittelt diese externe Einheit dem Gaszähler die Angaben betreffend dem Heizwert und der Gaszähler führt selber eine Korrektur des gemessenen Energieverbrauchswertes anhand dieser Angaben durch.

In einer anderen bevorzugten Variante des Verfahrens übermittelt der Gaszähler den Energieverbrauchswert oder einen über eine bestimmte Zeitspanne aufsummierten Energieverbrauchswert an eine Zentrale, in welcher dieser Wert mit den Angaben betreffend dem während dieser Zeitspanne vorhandenen Heizwert des bezogenen Gasgemisches korrigiert wird.

Weitere vorteilhafte Ausführungsformen gehen aus den abhängigen Patentansprüchen hervor.

## Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:

Figur 1    einen Ausschnitt aus einer Gasleitung mit einem erfindungsgemässen Gaszähler;

Figur 2    einen Vergleich einer Abweichung von Monatsmittelwerten von Heizwerten von Erdgas und entsprechende Messwertänderungen des erfindungsgemässen Gaszählers;

Figur 3a   Messwertfehler in Bezug auf einen effektiven Energiewert eines Gases für eine Volumenmessung,

Figur 3b   für eine Massenflussmessung und

Figur 3c   für eine erfindungsgemässe Energieflussmessung.

## Wege zur Ausführung der Erfindung

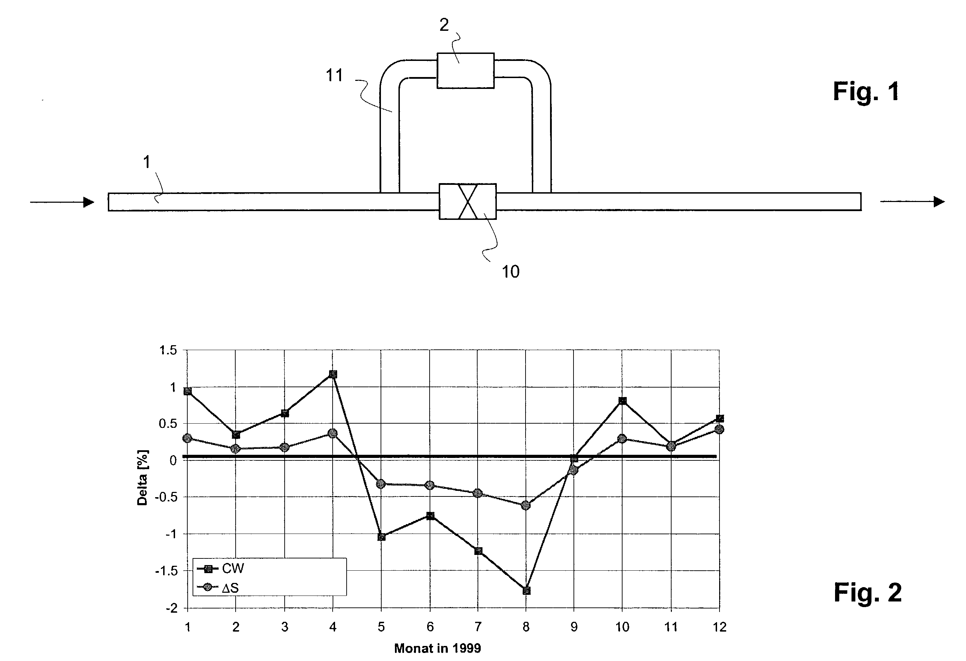

In Figur 1 ist eine Gasleitung dargestellt, welche mit einem erfindungsgemässen Gaszähler versehen ist. Die Gasleitung besteht aus einem Hauptleitungsrohr 1, welches mit einer gebäudeexternen, hier nicht dargestellten Gasnetzleitung verbunden ist. Dieses Hauptleitungsrohr 1 weist eine Rohrverengung 10 mit einem definierten Querschnitt auf. Durch die Gasleitung strömt ein Gas. Im allgemeinen handelt es sich dabei um ein Gasgemisch, dessen aktuelle Zusammensetzung sich ändert. Dies ist beispielsweise bei Erdgas der Fall, deren drei Hauptbestandteile, Methan, Propan und Ethan je nach Ursprung des Gases eine andere Gewichtung aufweisen. Diese drei brennbare Hauptbestandteile weisen jedoch auch unterschiedliche Heizwerte auf, so dass der Heizwert des resultierenden Gasgemisches entsprechend schwankt.

Es ist ein Gaszähler vorhanden, welcher ein Messmittel 2 zur Bestimmung eines Gasmassen-Durchflusses sowie eine hier nicht dargestellte Auswertelektronik aufweist. Das Messmittel 2 ist in einer einfachen Ausführungsform direkt im Hauptleitungsrohr 1 angeordnet. In der hier dargestellten, bevorzugten Ausführungsform zweigt jedoch vom Hauptleitungsrohr 1 ein Bypassrohr 11 ab, welches einen Bypass zur Rohrverengung 10 bildet. In diesem Bypassrohr ist das Messmittel 2 angeordnet. Vorzugsweise handelt es sich beim Messmittel 2 um ein Anemometer, vorzugsweise um ein CMOS-Anemometer mit einer Polysilizium-Struktur im Sandwich-Aufbau, wie es in den Publikationen J. Robadey et al., Two dimensional integrated gas flow sensors by CMOS IC technology, J. Mecromech. Microeng. 5(1995) 243-250, in F. Mayer, et al., Scaling of thermal CMOS gas flow microsensors: experiment and simulation, Proc. IEEE Micro Electro Mechanical Systems, (IEEE, 1996), 116-121, sowie in F. Mayer, et al., Single-Chip CMOS Anemometer, Proc. IEEE, International Electron Devices Meeting (IEDM, 1997) 895-898, offenbart ist und in der eingangs erwähnten unveröffentlichen deutschen Patentanmeldung Nr. 199 08 664.8 zur Verwendung als Gaszähler vorgeschlagen ist.

Das Messmittel 2 weist ein Heizelement und je einen in Strömungsrichtung vor und nach dem Heizelement gleichabständig angeordneten Temperatursensor auf. Ein zu messendes Gas strömt über die Oberfläche des Messmittels 2 und wird vom Heizelement erwärmt. Mittels der Temperatursensoren wird in Strömungsrichtung vor und nach dem Heizelement die Temperatur beziehungsweise die Temperaturdifferenz des Gases gemessen, wobei ein Sensorsignal S in Form eines Spannungssignals U erhalten wird, welches sich proportional zur Temperaturdifferenz $\Delta T$ verhält. Die Wärmeübertragungsrate ist von der Anzahl Moleküle pro Volumeneinheit und somit von der Gasmasse abhängig. Zudem hängt sie jedoch auch vom Heizwert des Gasgemisches, also von der Art beziehungsweise der Zusammensetzung des Gasgemisches ab.

Erfindungsgemäss wird nun die Erkenntnis eingesetzt, dass sich das Sensorsignal in Abhängigkeit des kalorimetrischen Wertes eines Gasgemisches ändert. Dies geschieht bei einer Eichung des Geräts als Volumenmessgerät und stärker bei einer Eichung des Geräts als Massendurchflussmesser. In Figur 2 ist diese Abhängigkeit dargestellt, wobei Figur 2 eine Abweichung in Prozent von Monatsmittelwerten der Heizwerte von Erdgas während eines Jahres zeigt. Diese Abweichung ist mit CW bezeichnet. Wie ersichtlich ist, schwankt der Heizwert um ca. 2 %. Ebenfalls dargestellt und mit $\Delta S$ bezeichnet, ist eine Änderung des Sensorsignalwertes S, welcher mittels des oben beschriebenen Messmittels 2 erhalten worden ist. Es ist ersichtlich, dass sich der Sensorsignalwert in die gleiche Richtung ändert wie der Heizwert.

Erfindungsgemäss lässt sich deshalb der Gaszähler beziehungsweise das Mittel zur Bestimmung des Massendurchflusses als Energiemessgerät eichen. Hierfür wird wie folgt vorgegangen:
In einem ersten Schritt werden Sensorsignalwerte $S(\dot{V}_{N2',n})$ in Abhängigkeit einer Durchflussrate für ein Eichgas bestimmt, wobei dies unter Normbedingungen, das heisst bei bei einer definierten Temperatur (beispielsweise 20°C) und einem definierten Druck (beispielsweise bei 1 bar) erfolgt. Diese Sensorsignalwerte sind proportional zu einer Gasmassen-Durchflussrate. Die Sensorsignalwerte $S(\dot{V}_{N2,n})$ werden in Form einer Sensoreichkurve $F_n(S(\dot{V}_{N2,n}))$ in der Auswertelektronik des Gaszählers gespeichert. Als Eichgas wird vorzugsweise Stickstoff oder Luft genommen. Diese Sensoreichkurve $F_n(S(\dot{V}_{N2,n}))$ beziehungsweise die Sensorsignalwerte $S(\dot{V}_{N2,n})$ werden in einem zweiten Schritt mit einem Signal-Umrechnungsfaktor $f_{N2-CH}$ und einem Brennwertfaktor $H_n$ für ein Basis-Gasgemisch multipliziert und wiederum gespeichert. Der Signal-Umrechnungsfaktor ist dabei ein Umrechnungsfaktor, welche den Unterschied der Empfindlichkeit des Messmittels 2 bei der Verwendung eines Basis-Gasgemisches anstelle des Eichgases, hier Stickstoff, berücksichtigt. Der Brennwertfaktor $H_n$ berücksichtigt den Heizwert dieses Basis-Gasgemisches, das heisst seinen kalorimetrischen Wert oder Brennwert. Als Basis-Gasgemisch wird vorzugsweise ein für das Einsatzgebiet des Gaszählers typisches mittleres Gasgemisch genommen.
Das erhaltene Produkt ergibt eine Leistung P

$$P = P(S) = F_n(S(\dot{V}_{N2,n})) \cdot f_{N2\text{-}CH} \cdot H_n$$

welche den momentanen Gasverbrauch als Energie pro Zeiteinheit angibt. Der Gaszähler ist somit als Energiemessgerät geeicht.

Durch Integration beziehungsweise Summation über eine bestimmte Zeitspanne lässt sich somit der Energieverbrauch E eines Basis-Gasgemisches bestimmen:

$$E = \int P(S) \cdot dt = f_{N2\text{-}CH} \cdot H_n \cdot \int F_n(S(\dot{V}_{N2,n})) \cdot dt$$

Zur Bestimmung der bezogenen Energie wird nun der gemessene und auf das Basis-Gasgemisch geeichte Energieverbrauchswert mit einem Korrekturfaktor multipliziert, wobei dieser Korrekturfaktor mindestens annähernd den Heiwert des bezogenen Gasgemisches berücksichtigt.
Dieser Heizwert wird in einer externen Einheit bestimmt. Die Einheit muss nicht beim entsprechenden Verbraucher stehen sondern es lässt sich für ein gesamtes Verbrauchernetz eine einzige Einheit einsetzen. Diese kann Bestandteil einer Zentrale sein oder mit dieser in kommunikativer Verbindung stehen. Zur Bestimmung des Heizwertes lassen sich bekannte Mittel einsetzen. Vorteilhaft ist dabei, dass sich auch genaue und teure Messmittel hierfür einsetzen lassen, da ja nur ein einziges Gerät notwendig ist. Diese externe Einheit misst somit zu jedem oder zu bestimmten Zeitpunkten den Heizwert des durch das Verbrauchernetz strömenden Gasgemisches und speichert diesen Wert bei sich.

In einer ersten Variante der Erfindung liefert die externe Einheit dem oder jedem Gaszähler des Verbrauchernetzes Angaben über den Heizwert des bezogenen Gasgemisches. Dies kann in vorbestimmten Zeitabständen oder bei einer starken Veränderung des Gasgemisches erfolgen. Der Gaszähler weist in dieser Variante Rechnungselemente zur Korrektur des gemessenen Energieverbrauchswertes mit den Angaben bezüglich des Heizwertes auf. Dabei bestehen die Angaben aus dem Korrekturfaktor, dem Heizwert oder einem dem Korrekturfaktor zuordnungsbaren Code. In einer bevorzugten Variante summiert dabei der Gaszähler den gemessenen Energieverbrauchswert über eine bestimmte Zeitspanne und integriert diesen Wert mit dem Korrekturfaktor, welcher einen gemittelten Heizwert enthält. Dadurch wird für den effektiven Energieverbrauch erhalten:

$$E = f_{N_2-CH} \cdot \sum_{i=1}^{m} (\overline{H}_n(i) \cdot \int_i F_n(S(\dot{V}_{N_2,n})) \cdot dt)$$

und wenn zusätzlich die Signal-Umrechnungsfaktoren gemittelt werden

$$E = \sum_{i=1}^{m} (\overline{f}_{N_2-CH}(i) \cdot \overline{H}_n(i) \cdot \int_i F_n(S(\dot{V}_{N_2,n})) \cdot dt)$$

In einer anderen Variante des Verfahrens übermittelt der Gaszähler den gemessenen Energieverbrauchswert an eine Zentrale, welche den gemessenen Energieverbrauchswert mit dem Korrekturfaktor multipliziert. Ist die externe Einheit nicht in der Zentrale integriert, so übermittelt auch sie Angaben zum Heizwert des bezogenen Gasgemisches an die Zentrale. Vorzugsweise summieren beziehungsweise integrieren der Gaszähler und/oder die externe Einheit ihre Messwerte über eine bestimmte Zeitspanne und übermitteln den integrierten Wert an die Zentrale.

In allen Varianten lässt sich die Korrektur des gemessenen Energieverbrauchswerts zu einem beliebigen Zeitpunkt, also auch erst bei der Ablesung des Zählers durchführen.

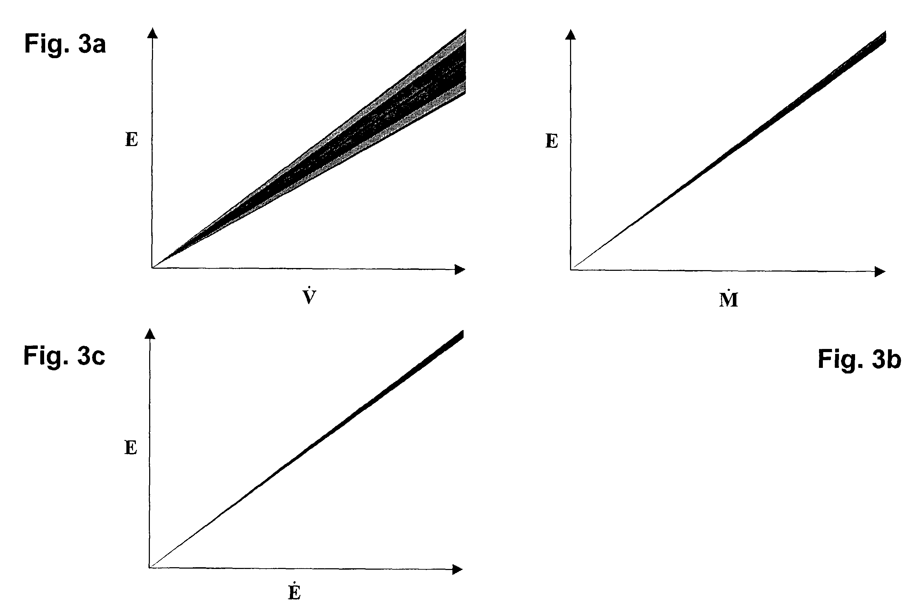

Das erfindungsgemässe Verfahren und der erfindungsgemässe Gaszähler ermöglichen dank der direkten Eichung als Energiemessgerät eine kostengünstige und faire Abrechnung des Gasbezuges. Die genauere Messmethode ist aus den Figuren 3a bis 3c ersichtlich. Diese Figuren zeigen, wie gross eine Abweichung eines gemessenen Energiewertes von einem effektiven Energiewert eines Gasgemisches ist. Dabei zeigt Figur 3a die Situation, wenn ein Gaszähler für eine Gas-Volumendurchflussmessung geeicht ist. Dargestellt ist die Volumendurchflussrate $\dot{V}$ in Funktion der Energie E. In diesem Falle für ein herkömmliches Balgenmessgerät ohne zusätzliche Temperaturkompensation. Wird mit einem solchen Gerät aus dem Volumenstrom die entsprechende Gasenergie bestimmt, so beträgt der Fehler bis zu ± 18 %. Hauptursachen für den Fehler sind Temperaturschwankungen, welche im allgemeinen maximal circa ± 10 % betragen, und Druckschwankungen von maximal circa ± 5 %. Figur 3b zeigt einen Messfehler, entstanden durch eine Eichung auf den Massenfluss, beispielsweise mit dem oben beschriebenen Messmittel 2. Dargestellt ist die Massendurchflussrate M in Funktion der Energie E. Der maximale Fehler beträgt annähernd ± 4 %, wobei circa 2% durch das Messgerät und weitere circa 2% durch die zeitliche Schwankung der Zusammensetzung des Gasgemisches beziehungsweise des Brennwertes entstanden sind. Figur 3c zeigt den Messfehler bei Einsatz des obengenannten Messmittels 2 mit einer erfindungsgemässen Eichung auf den Energiefluss. Dargestellt ist die Energiedurchflussrate $\dot{E}$ in Funktion der Energie E. Wie aus den Figuren ersichtlich, gibt ein direkt auf Energieflussmessung geeichtes Gerät die Wirklichkeit am besten wieder.

**Bezugszeichenliste**

1     Hauptleitungsrohr
10    Rohrverengung
11    Bypassrohr
2     Messmittel
CW    Abweichung von Monatsmittelwerten
S     Sensorsignalwert
ΔS    Änderung des Sensorsignalwerts S

**Patentansprüche**

1. Verfahren zur Bestimmung eines Gasgemisch-Verbrauchs mittels eines Gaszählers, welcher zu einer Durchflussrate proportionale Sensorsignalwerte bestimmt, **dadurch gekennzeichnet,**

   **dass** der Gaszähler als Energiemessgerät geeicht wird, wobei seine Eichung auf einem Basis-Gasgemisch basiert,
   und **dass** ein gemessener Energieverbrauchswert mit einem Korrekturfaktor multipliziert wird, welcher mindestens annähernd den Heizwert eines bezogenen Gasgemisches berücksichtigt, wobei dieser Heizwert von einer externen Einheit bestimmt wird.

2. Verfahren nach Anspruch 1, **dadurch gekennzeichnet, dass** für die Eichung des Gaszählers die Sensorsignalwerte in Abhängigkeit der Durchflussrate eines Eichgases bestimmt und in Form einer Sensoreichkurve im Gaszähler gespeichert werden, wobei die Sensoreichkurve beziehungsweise die Sensorsignalwerte mit einem Signal-Umrechnungsfaktor für das Basis-Gasgemisch und mit einem Brennwertfaktor für das Basis-Gasgemisch multipliziert werden und das erhaltene Produkt einen Gasverbrauch in einer Energieeinheit angibt.

3. Verfahren nach Anspruch 2, **dadurch gekennzeichnet, dass** als Eichgas Luft oder Stickstoff verwendet wird.

4. Verfahren nach Anspruch 1, **dadurch gekennzeichnet, dass** die externe Einheit Angaben über den Heizwert an den Gaszähler übermittelt.

5. Verfahren nach Anspruch 1, **dadurch gekennzeichnet, dass** der Gaszähler den gemessenen Energieverbrauchswert einer Zentrale übermittelt.

6. Verfahren nach Anspruch 5, **dadurch gekennzeichnet, dass** die externe Einheit die Zentrale ist.

7. Verfahren nach Anspruch 5, **dadurch gekennzeichnet, dass** die externe Einheit Angaben über den Heizwert des bezogenen Gasgemisches an die Zentrale übermittelt.

8. Verfahren nach Anspruch 1, **dadurch gekennzeichnet, dass** der Korrekturfaktor einen über eine bestimmte Zeitspanne gemittelten Heizwert des bezogenen Gasgemisches berücksichtigt.

9. Verfahren nach den Ansprüchen 5 und 8, **dadurch gekennzeichnet, dass** der Gaszähler der Zentrale einen über diese bestimmte Zeitspanne summierten Wert des Energiebezugs liefert.

10. Gaszähler zur Bestimmung eines Gasgemisch-Verbrauchs, wobei der Gaszähler ein Mittel zur Bestimmung eines zu einer Durchflussrate proportionalen Sensorsignals aufweist, **dadurch gekennzeichnet, dass** der Gaszähler als Energiemessgerät geeicht ist, wobei seine Eichung auf einem Basis-Gasgemisch basiert, und dass der Gaszähler Korrekturmittel aufweist, um einen gemessenen Energieverbrauchswert mit einem Korrekturfaktor zu multiplizieren, welcher mindestens annähernd den Heizwert eines bezogenen Gasgemisches berücksichtigt.

11. Gaszähler nach Anspruch 10, **dadurch gekennzeichnet, dass** das Korrekturmittel einen Empfänger zum Empfang von Angaben über den Heizwert des bezogenen Gasgemisches und ein Rechnungselement zur Korrektur des gemessenen Energiebezugswertes mittels dieser Angaben aufweist.

12. Gaszähler nach Anspruch 10, **dadurch gekennzeichnet, dass** das Korrekturmittel ein Mittel zur Übertragung der gemessenen Energieverbrauchswerte an eine Zentrale aufweist.

Fig. 1

Fig. 2

Fig. 3a

Fig. 3b

Fig. 3c

## EUROPÄISCHER RECHERCHENBERICHT

Europäisches
Patentamt

Nummer der Anmeldung

EP 00 81 0511

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 608 514 A (BADGER METER,INC.)<br>3. August 1994 (1994-08-03)<br>* Zusammenfassung; Abbildung 1 *<br>--- | 1,10 | G01F1/74<br>G01F25/00<br>G01F15/04 |
| A | WO 98 57131 A (FÖVAROSI GAZMÜVEK RT)<br>17. Dezember 1998 (1998-12-17)<br>* Zusammenfassung; Abbildung 3 *<br>----- | 1,10 | |

**RECHERCHIERTE SACHGEBIETE (Int.Cl.7)**

G01F

Der vorliegende Recherchenbericht wurde für alle Patentansprüche erstellt

| Recherchenort | Abschlußdatum der Recherche | Prüfer |
|---|---|---|
| BERLIN | 13. Oktober 2000 | Vorropoulos, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 81 0511

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 608514 | A | 03-08-1994 | US | 5323657 A | 28-06-1994 |
| | | | DE | 69425515 D | 21-09-2000 |
| | | | EP | 0608736 A | 03-08-1994 |
| WO 9857131 | A | 17-12-1998 | HU | 9701034 A | 28-01-1999 |
| | | | AU | 7783598 A | 30-12-1998 |

EPO FORM P0461

Für nähere Einzelheiten zu diesem Anhang : siehe Amtsblatt des Europäischen Patentamts, Nr.12/82